# EUROPEAN PATENT APPLICATION

(11) **EP 1 098 128 A1**
(43) Date of publication of application: **09.05.2001**
(21) Application number: 00123197.6
(22) Date of filing: 26.10.2000
(51) Int. Cl.: F16L 37/088

(54) **Plug-in connector for fluid transporting conduits**

(30) Priority: 11.07.2000 DE 10033675; 04.11.1999 DE 29919353 U
(71) Applicant: DEERE & COMPANY, Moline, Illinois 61265-8098 (US); Intec Gmbh, 69434 Hirschhorn/Neckar (DE)
(72) Inventor: Gawlick, Dieter, 67063 Ludwigshafen (DE); Schwegler, Heinz, 68809 Neulussheim (DE); Dietzel, Karl-Ludwig, 68766 Hockenheim (DE)
(74) Representative: Lau-Loskill, Philipp, Dipl.-Phys.

(57) **Zusammenfassung**

Es wird eine Steckverbindung zum Verbinden von Fluidleitungssystemen mit einem ersten Anschlussstück (10) und eine zweiten Anschlussatück (12) beschrieben. Das erste Anschlussstück (10) ist in einem Endbereich (38) rohrförmig ausgebildet und weist einen nach außen vorspringenden Ringwulst (40) auf, der eine dem freien Rohrende abgewandte radiale steile Kante (46) und eine dem freien Rohrende zugewandte im wesentlichen kegelförmige Rampe (44) aufweist. Das zweite Anschlussstück (12) weist eine Ausnehmung (20, 22) zur Aufnahme des Endbereichs (38) des ersten Anschlussstücks (10) und auf seinem Umfang wenigstens einen Einschnitt (34) für ein Federelement (36) auf. Im montierten Zustand liegt das Federelement (36) an der steilen Kante (46) des Ringwulstes (40) an, so dass das erste Anschlussstück (10) in dem zweiten Anschlussstück (12) gehalten wird. Für eine optimale Schwingungsdämpfung zwischen den Anschluasstücken (10, 12) wird vorgeschlagen, dass axial zwischen der kegelförmigen Rampe (44) und dem zweiten Anschlussstück (12) ein elastisches Abstützelement (32) eingespannt ist.

## Description

Die Erfindung betrifft eine lösbare Steckverbindung zum Verbinden von Fluidleitungssystemen. Die Steckverbindung enthält ein erstes Anschlussstück, welches in einem Endbereich rohrförmig ausgebildet ist und einen nach außen vorspringenden Ringwulst aufweist, der eine dem freien Rohrende abgewandte radiale steile Kante und einen dem freien Rohrende zugewandte im wesentlichen kegelförmige Rampe aufweist. Die Steckverbindung enthält des weiteren ein zweites Anschlussstück, welches eine Ausnehmung zur Aufnahme des Endbereichs des ersten Anschlussetücks und auf seinem Umfang wenigstens einen Einschnitt für ein Federelement aufweist. Das Federelement liegt im montierten Zustand an der steilen Kante des Ringwulstes an, so dass das erste Anschlussstück gegen axiale Verschiebung in dem zweiten Anschlussstück festgehalten wird.

Eine derartige Steckverbindung ist durch die EP-A-0 811 798 bekannt. Dort ist die Ausnehmung als Stufenbohrung mit zwei Durchmesserbereichen ausgebildet, die als Führungsbereiche für einen Endbereich und einen Ringwulst des ersten Anschlussstücks dienen. Zwischen den Führungsbereichen ist eine den Endbereich des ersten Anschluasstücks umgebende Dichtung vorgesehen. Die bekannte Ausbildung soll dafür sorgen, dass die verwendete Dichtung möglichst nur die anliegende Dichtkraft aufnehmen muss, um eine hohe Lebensdauer zu sichern. Sie hat jedoch eine relativ große Baulänge.

Die der Erfindung zugrunde liegende Aufgabe wird darin gesehen, eine Steckverbindung der eingangs genannten Art anzugeben, durch welche die vorgenannten Probleme überwunden werden. Insbesondere soll die Steckverbindung eine vergleichsweise geringe Baulänge ermöglichen, eine zuverlässige Abdichtung zwischen den beiden Anschlussstücken gewährleisten und geeignet sein, Schwingungen zwischen den Anschluesstücken dämpfend aufzunehmen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist bei einer eingangs genannten Steckverbindung, die sich in montiertem Zustand befindet, axial zwischen der kegelförmigen Rampe und einer Wandung des zweiten Anschlussstücks ein elastisches Abstütz- oder Verspannelement eingespannt oder eingeklemmt. Dieses Abstützelement stützt das erste Anschlussstück gegenüber dem zweiten Anschlussstück ab und hält die Verbindung zwischen den beiden Anschlussstücken unter Spannung. Wegen seiner Elastizität dient es neben seiner Stütz- und Einspannwirkung auch als Dämpfer, der Schwingungen zwischen den beiden Anschlussstücken aufzunehmen vermag.

Es ist zweckmäßig, das Abstützelement gleichzeitig als Dichtung auszulegen, die eine Abdichtung zwischen dem ersten Anschlussstück und dem zweiten Anschlussstück ermöglicht.

Für eine zuverlässige Abdichtung zwischen den beiden Anschlussstücken sieht eine bevorzugte Weiterbildung der Erfindung vor, in einen zylindrischen Abschnitt der Ausnehmung des zweiten Anschlussstücks, welcher den Endbereich des ersten Anschlussetücks führt, wenigstens eine sich radial erstreckende Ringnut einzulassen, die ein Dichtelement aufnimmt, welches eine Abdichtung gegenüber dem Endbereich des ersten Anschluesstücks vornimmt.

Vorzugsweise ist das Abstützelement oder das Dichtelement oder sowohl das Abstützelement als auch das Dichtelement als üblicher O-Ring ausgebildet.

Eine einfach herzustellende, funktionsfähige Anordnung des Abstützelements ergibt sich dadurch, dass die Ausnehmung des zweiten Anschlussstücks im wesentlichen als Stufenbohrung mit unterschiedlichen Durchmessern ausgebildet ist. Ein axial tiefer liegender Abschnitt der Stufenbohrung, der einen geringeren Durchmesser aufweist, nimmt den rohrförmigen Endbereich des ersten Anschlussstücks auf und stützt diesen ab. Ein axial weiter außen liegender Abschnitt der Stufenbohrung, der einen größeren Durchmessers aufweist, ist an den Außendurchmesser des Ringwulstes angepasst und nimmt das elastische Abstützelement auf. Das Abstützelement ist hierbei zwischen der kegelförmigen Rampe des Ringwulstes und der Ringfläche, welche die beiden Abschnitte unterschiedlichen Durchmessers miteinander verbindet, eingespannt. Die Ringfläche ist gewöhnlich radial ausgerichtet. Es kann sich hierbei jedoch auch um eine kegelförmig oder anders ausgebildete Verbindungsfläche handeln.

Um das Abstützelement innerhalb der Stufenbohrung gegen Herausfallen zu sichern, ist in den außen liegenden Bohrungsabschnitt wenigstens eine sich radial nach außen erstreckende Ringnut eingelassen, die das Abstützelement teilweise aufnimmt. An die Ringnut schließt sich zum außen liegenden Ende des äußeren Bohrungsabschnitts ein engerer Bohrungsabschnitt an. Bei der Montage wird das flexible ringförmige Abstützelement in die Ringnut hinter den als Rückhalter dienenden engeren Bohrungsabschnitt eingesetzt und kann dann nicht mehr selbständig aus der Ausnehmung des zweiten Anschlussstücks herausfallen.

Die erfindungsgemäße Steckverbindung lässt sich auf vielfältige Weise einsetzen. Die Anschlussstücke können mit einem Fluidrohr oder einem Fluidschlauch verbunden sein. Sie können einen Schlauchwulst zum Aufschieben eines Schlauchs oder ein Gewinde zum Einschrauben in ein Gehäuse aufweisen. Das zweite Anschlussstück kann zwei oder mehrere Ausnehmungen aufweisen, die der erfindungsgemäßen Aufnahme der Endbereiche von ersten Anschlussstücken dienen. Die erfindungsgemäß ausgebildeten Anschlussetücke können auch in Gehäuse integriert sein. Vorzugsweise sind die Anschlussstücke zueinander fluchtend ausgerichtet. Es sind jedoch auch winklige Verbindungen möglich.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Längsschnitt durch eine erfindungsgemäße Steckverbindung,
- Fig. 2: einen vergrößerten Ausschnitt der Fig. 1 und
- Fig. 3 bis 9: verschiedene Kupplungsvarianten mit erfindungsgemäßen Steckverbindungen.

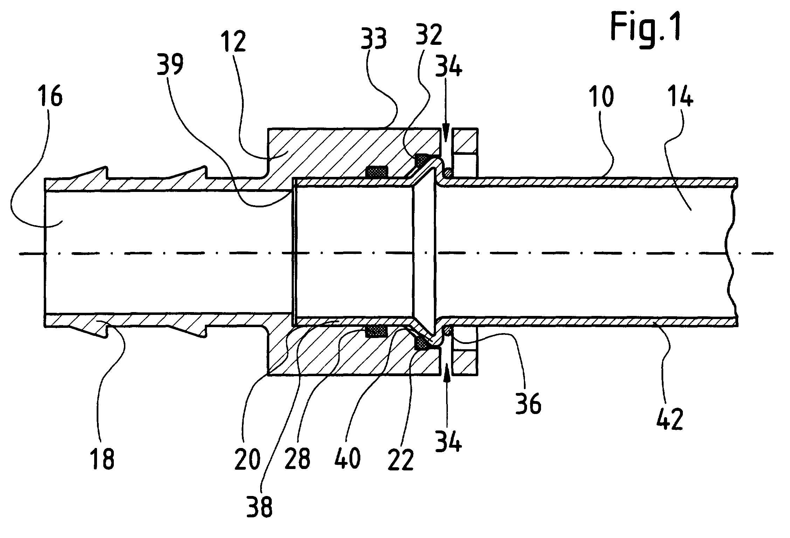

Die in Fig. 1 dargestellte Steckverbindung enthält ein erstes rohrförmiges Anschlussatück 10 und ein zweites rohrförmiges Anschlussatück 12, die miteinander fluchtende zentrale Zylinderdurchgangsöffnung 14, 16 aufweisen. Das zweite Anschlussstück 12 weist auf seiner linken Seite einen Schlauchwulst 18 auf, auf den ein nicht dargestellter Fluidschlauch aufgeschoben und auf übliche Weise befestigt werden kann.

Auf der rechte Seite des zweiten Anschlussstücks 12 befindet sich eine Stufenbohrung mit einem ersten axial tiefer liegenden Bohrungsabschnitt 20 geringeren Durchmessers und einem zweiten äußeren Bohrungsabschnitt 22 größeren Durchmessers. Die beiden Bohrungsabschnitte 20, 22 sind durch eine sich radial erstreckende Ringfläche 24 miteinander verbunden. In dem ersten Bohrungsabschnitt 20 ist eine sich radial nach außen erstreckende Ringnut 26 eingelassen, die einen Dichtungsring 28 aufnimmt. Bei dem Dichtungsring 28 handelt es sich um einen handelsüblichen O-Ring.

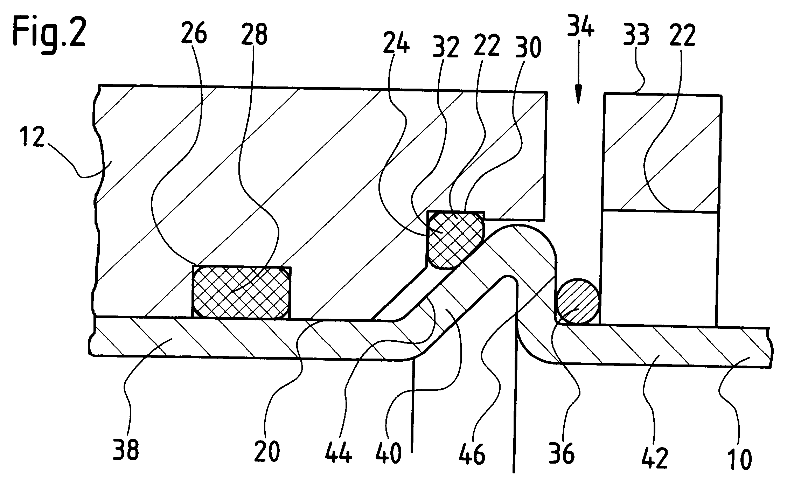

In den zweiten Bohrungsabschnitts 22 ist eine Ringnut 30 eingelassen, die in Fig. 2 erkennbar ist. In die Ringnut 30 ist ein elastisches ringförmiges Abstützelement 32 eingesetzt. Es handelt sich bei dem Abstützelement 32 um einen handelsüblichen O-Ring. Der O-Ring 32 wird in der Ringnut 30 im äußeren Bohrungsabschnitt 22 unverlierbar gehalten.

Auf zwei sich gegenüberliegenden Seiten der Umfangsfläche 33 des zweiten Anschlussstücks 12 befindet sich im axialen Bereich des zweiten, äußeren Bohrungsabschnitts 22 je ein Einschnitt 34, welcher der Aufnahme eines Federelements 36 dient.

Das erste Anschlussstück 10 besteht aus einem gestauchten Rohr. Es enthält einen rohrförmigen Endbereich 38 mit einem Rohrende 39, einen sich hieran anschließenden radial nach außen vorspringenden Ringwulst 40 und ein Anschlussrohr 42. Der Endbereich 38 wird durch den ersten, inneren Bohrungsabschnitt 22 des zweiten Anachlussatücks 12 aufgenommen und stützt sich an diesem ab. Der Dichtungsring 28 dichtet den Endbereich 38 des ersten Anschlussstücks 10 gegenüber dem zweiten Anschlussstück 12 ab.

Der Ringwulst 40 ist auf der Seite des Endbereichs 38 als kegelförmig geneigte, relativ flache verlaufende Rampe 44 ausgebildet. An Stelle der Kegelform können auch andere Rampenformen verwendet werden, die beispielsweise von der Kegelform abweichen, in dem sie konkav eingebuchtet oder konvex ausgewölbt sind. Bei montierter, zusammengesteckter Steckverbindung ist das Abstützelement 32 zwischen der Ringfläche 24, der Rampe 44 und der Zylinderfläche des zweiten, äußeren Bohrungsabschnitts 22 eingeklemmt oder eingespannt und dichtet die beiden Anschlussstücke 10, 12 gegeneinander ab. Durch seine Elastizität gibt das Abstützelement 32 bei Relativbewegungen zwischen den beiden Anschlussstücken 10, 12 etwas nach und dient somit als Dämpfer, der Schwingungen aufnimmt.

Die dem Endbereich 38 abgewandte Seite des Ringwulstes 40 verläuft im wesentlichen in radialer Richtung und ist als steile Kante 46 ausgebildet. An dieser Kante 46 stützt sich bei montierter Steckverbindung auf übliche Weise das Federelement 36 ab. Geeignete Ausbildungen des Federelements 36 und deren Anordnung innerhalb einer Steckverbindung sind in der EP-A-0 811 798 und der DE-A-38 37 492 beschrieben, auf die hiermit zwecks Offenbarung verwiesen wird.

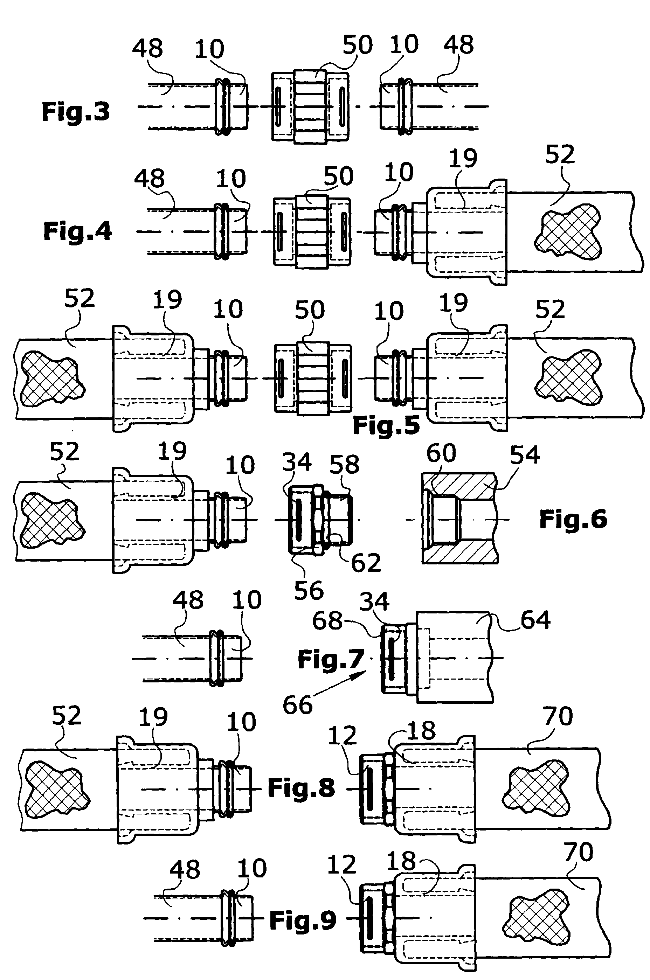

Aus den Figuren 3 bis 9 gehen unterschiedliche Kupplungsvarianten hervor, die eine Schnell-Steckverbindung von Fluidleitungssystemen erlauben.

Fig. 3 zeigt die Kupplung zweier Fluidrohre 48. Die einander zugewandten Enden der Fluidrohre 48 sind als erste Anschlussstücke 10, wie oben beschrieben, ausgebildet. Zwischen den Anschlussstücken 10 der Fluidrohre 48 ist ein zweites Anschlussstück 50 angeordnet, welches auf seinen gegenüberliegenden Seiten je eine erfindungsgemäß ausgebildete, axial ausgerichtete Ausnehmung zur Aufnahme des jeweils ersten Anschlussstücks 10 aufweisen. Zur Montage werden die beiden ersten Anschlussstücke 10 in die zugehörigen Ausnehmungen des zweiten Anschlussstücks 50 eingeführt. Beim Vorbeigleiten der kegelförmigen Rampen 44 weiten sich die vormontierten Federelemente 36 auf und schnappen schließlich hinter der steilen Kante 46 ein. Die Montage ist ohne Werkzeug lediglich mit Handkraft möglich. Die Aufweitung der Federelement bei der Demontage kann mit üblichen Werkzeugen wie z. B. Zange oder Schraubendreher erfolgen. Spezialwerkzeuge sind nicht nötig.

Die Kupplung gemäß Fig. 4 unterscheidet sich von der in Fig. 3 dargestellten lediglich dadurch, dass an das rechte erste Anschlussstück 10 ein Schlauchwulst 19 angeformt ist, auf den ein Schlauch 52 aufgeschoben ist. Fig. 5 zeigt zwei miteinander zu verbindende Schläuche 52, die jeweils auf einen Schlauchwulst 19 eines zugehörigen ersten Anschlussstücks 10 aufgeschoben sind.

Bei der in Fig. 6 dargestellten Kupplung wird mittels einer erfindungsgemäßen Schnell-Steckverbindung ein Schlauch 52 an ein Gehäuse 54, beispielsweise ein Getriebegehäuse, angeschlossen. Ein zweites Anschlussstück 56 weist auf seiner linken Seite eine Ausnehmung auf, in die, wie bei Fig. 5, ein erstes Anschlußstück 10 mit aufgestecktem Schlauch 52 einsteckbar ist. Auf der entgegengesetzten, rechten Seite weist das zweite Anschlußstück 56 einen Schraubgewindeansatz 58 auf, der in eine entsprechende, lediglich angedeutete Gewindebohrung 60 des Gehäuses 54 einschraubar ist. Die Abdichtung zwischen zweitem Anschlußstück 56 und Gehäuse 54 erfolgt über einen Dichtungsring 62.

Gemäß Fig. 7 ist das zweite Anschlussstück 66 Teil eines Gehäuses 64 und in dieses integriert. Das Gehäuse 66 besitzt u. a. einen Vorsprung 68 mit zwei sich gegenüberliegenden Einschnitten 34, in die ein Federelement 36 einsetzbar ist.

Aus Fig. 8 geht die unmittelbare Kupplung zweier Schläuche 52, 70 hervor, wobei kein Zwischenstück wie bei den Figuren 3 bis 6 erforderlich ist. Der linke Schlauch 52 ist mit einem ersten Anschlussstück 10 entsprechend der in den Figuren 4 bis 6 dargestellten Ausführungen ausgebildet. Der rechte Schlauch 70 ist auf den Schlauchwulst 18 eines zweiten Anschlussstücks, das dem in Fig. 1 dargestellten entspricht, aufgeschoben.

Fig. 9 zeigt die Kupplung zwischen einem Fluidrohr 48 gemäß Fig. 3 oder Fig. 4 und einem auf ein zweites Anschlussstück aufgeschobenem Schlauch gemäß Fig. 8.

Auch wenn die Erfindung lediglich von einigen Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Steckverbindung zum Verbinden von Fluidleitungssystemen mit einem ersten Anschluasstück (10), welches in einem Endbereich (38) rohrförmig ausgebildet ist und einen nach außen vorspringenden Ringwulst (40) aufweist, der eine dem freien Rohrende (39) abgewandte radiale steile Kante (46) und eine dem freien Rohrende (39) zugewandte im wesentlichen kegelförmige Rampe (44) aufweist, und mit einem zweiten Anschlussstück (12), welches eine Ausnehmung (20, 22) zur Aufnahme des Endbereichs (38) des ersten Anschlussstücks (10) und auf seinem Umfang (33) wenigstens einen Einschnitt (34) für ein Federelement (36) aufweist, derart, dass im montierten Zustand das Federelement (36) an der steilen Kante (46) des Ringwulstes (40) anliegt, so dass das erste Anschlussstück (10) in dem zweiten Anschlussstück (12) gehalten wird, dadurch gekennzeichnet, dass axial zwischen der kegelförmigen Rampe (44) und dem zweiten Anschlussstück (12) ein elastisches Abstützelement (32) eingespannt ist.

2. Steckverbindung nach Anspruch 1, dadurch gekennzeichnet, dass das Abstützelement (32) gleichzeitig als Dichtung ausgelegt ist und eine Abdichtung zwischen dem ersten Anschlussstück (10) und dem zweiten Anschlussstück (12) ermöglicht.

3. Steckverbindung nach Anspruch 1 oder 2, dadurch gekennzeichnet, dass in einen den Endbereich (38) des ersten Anschlussstücks (12) führenden zylindrischen Abschnitt (20) der Ausnehmung des zweiten Anschlussstücks (12) wenigstens eine Ringnut (26) eingelassen ist, die ein Dichtelement (28) aufnimmt, welches eine Abdichtung des zweiten Anschlussstücks (12) gegenüber dem Endbereich (38) des ersten Anschlussstücks (10) vornimmt.

4. Steckverbindung nach einem der Ansprüche 1 bis 3, dadurch gekennzeichnet, dass das Abstützelement (32) und/oder das Dichtelement (28) ein O-Ring ist.

5. Steckverbindung nach einem der Ansprüche 1 bis 4, dadurch gekennzeichnet, dass die Ausnehmung (20, 22) des zweiten Anschlussstücks im wesentlichen eine Stufenbohrung mit unterschiedlichen Durchmessern ist, deren tiefer liegender Abschnitt (20) geringeren Durchmessers den rohrförmigen Endbereich (38) des ersten Anschlussstücks (10) aufnimmt und deren äußerer Abschnitt (22) größeren Durchmessers an den Außendurchmesser des Ringwulstes (40) angepasst ist und das elastische Abstützelement (32) aufnimmt.

6. Steckverbindung nach Anspruch 5, dadurch gekennzeichnet, dass in den äußeren Abschnitt (22) wenigstens eine sich radial nach außen erstreckende Ringnut (30) eingelassen ist.

7. Steckverbindung nach einem der Ansprüche 1 bis 6, dadurch gekennzeichnet, dass das erste Anschlussstück (10) und/oder das zweite Anschlussstück (12) mit einem Rohr (48) oder einem Schlauch (52, 70) verbunden ist.

8. Steckverbindung nach einem der Ansprüche 1 bis 7, dadurch gekennzeichnet, dass das erste Anschlussstück (10) und/oder das zweite Anschlussstück (12) einen Schlauchwulst (18, 19) zum Aufschieben eines Schlauchs (52, 70) aufweist.

9. Steckverbindung nach Anspruch 8, dadurch gekennzeichnet, dass ein Schlauchwulst (18) und die Ausnehmung (20, 22) sich auf gegenüberliegenden Seiten des zweiten Anschlussstücks (12) befinden und miteinander fluchten.

10. Steckverbindung nach einem der Ansprüche 1 bis 9, dadurch gekennzeichnet, dass das zweite Anschlussstück (50) wenigstens zwei Ausnehmungen (20, 22) zur Aufnahme je eines ersten Anschlussstücks (10) aufweist.

11. Steckverbindung nach Anspruch 10, dadurch gekennzeichnet, dass sich auf gegenüberliegenden Seiten des zweiten Anschlussstücks (50) je eine Ausnehmung (20, 22) befindet und dass die Ausnehmungen (20, 22) miteinander fluchten.

12. Steckverbindung nach einem der Ansprüche 1 bis 11, dadurch gekennzeichnet, dass das zweite Anschlussstück (56) ein Gewinde (58) zum Einschrauben in ein Gehäuse (54)aufweist.

13. Steckverbindung nach Anspruch 12, dadurch gekennzeichnet, dass die Ausnehmung (20, 22) und das Gewinde (58) sich auf gegenüberliegenden Seiten des zweiten Anschlussstücks (56) befinden und miteinander fluchten.

14. Steckverbindung nach einem der Ansprüche 1 bis 13, dadurch gekennzeichnet, dass das erste Anschlussstück oder das zweite Anschlussstück (66) in ein Gehäuse (64) integriert ist, welches einen vorstehenden Rohrabschnitt mit Ringwulst (40) enthält bzw. eine Ausnehmung (20, 22) zur Aufnahme des Endbereichs (38) des ersten Anschlussstücks (10) und einen von außen zugänglichen Einschnitt (34) für ein Federelement (36) aufweist.
